# EUROPÄISCHE PATENTANMELDUNG

(11) **EP 3 503 249 A2**
(43) Veröffentlichungstag der Anmeldung: **26.06.2019**
(21) Anmeldenummer: 18213494.0
(22) Anmeldetag: 18.12.2018
(51) Int. Cl.: H01M 2/10

(54) **ENERGIESPEICHERANORDNUNG MIT DECKELVERSCHRAUBUNG**

(30) Priorität: 21.12.2017 DE 102017011892
(71) Anmelder: AUDI AG, 85045 Ingolstadt (DE)
(72) Erfinder: Röcker, Jochen, 71563 Affalterbach (DE); Schüssler, Martin, 85092 Kösching (DE); Milde, Thomas, 71543 Wüstenrot (DE)

(57) **Zusammenfassung**

Energiespeicheranordnung (2), umfassend wenigstens ein Energiespeichermodul (12) und ein Energiespeichergehäuse (3), wobei das Energiespeichermodul (12) wenigstens einen Energiespeicher (19) und das Energiespeichergehäuse (3) einen Gehäuseboden (7), mehrere randseitig an dem Gehäuseboden (7) anschließende Seitenwände (6) und einen Gehäusedeckel (11) sowie wenigstens einen zwischen zwei Seitenwänden (6) angeordneten Träger (8) aufweist, wobei das Energiespeichermodul (12) wenigstens einen sich zwischen der deckelseitigen Seite des Trägers (8) und dem Gehäusedeckel (11) angeordneten Befestigungsabschnitt (15) aufweist, wobei der Befestigungsabschnitt (15) an dem Gehäusedeckel (11) und dem Träger (8) befestigt ist.

## Beschreibung

Die Erfindung betrifft eine Energiespeicheranordnung, umfassend wenigstens ein Energiespeichermodul und ein Energiespeichergehäuse, wobei das Energiespeichermodul wenigstens einen Energiespeicher und das Energiespeichergehäuse einen Gehäuseboden, mehrere randseitig an dem Gehäuseboden anschließende Seitenwände und einen Gehäusedeckel sowie wenigstens einen zwischen zwei Seitenwänden angeordneten Träger aufweist.

In Kraftfahrzeugen mit elektrischem oder Hybridantrieb werden in vielen Fällen Energiespeicher wie z. B. Batterien oder Akkumulatoren verwendet, die in Energiespeichergehäusen verbaut sind. Die Energiespeichergehäuse dienen dazu, die Energiespeicher vor äußeren Einflüssen wie etwa Wasser oder Schmutz zu schützen. Außerdem kommt Energiespeichergehäusen dahingehend eine wichtige Rolle zu, da sie im Crashfall einen Schutz für die Batterien bieten. So haben etwa beschädigte Batterien ein besonders hohes Gefahrenpotential hinsichtlich auslaufender Chemikalien oder Bränden. Aus diesem Grund werden besonders hohe Anforderungen an die mechanische Festigkeit von Energiespeichergehäusen gestellt.

Aus dem Stand der Technik sind verschiedene Möglichkeiten zur Bildung mechanisch möglichst stabiler Energiespeicheranordnungen bekannt.

Aus DE 10 2014 203 507 A1 ist ein Energiespeichergehäuse bekannt, das sich am Boden anschließende Seitenwände sowie einen Deckel aufweist. Ferner umfasst dieses Energiespeichergehäuse zwischen zwei Seiten angeordnete Versteifungselemente beziehungsweise Träger. Einzelne, über den Gehäuseboden hinausragende Träger, die beispielsweise am Fahrzeuglängsträger befestigt sind, sorgen für eine Erhöhung der mechanischen Stabilität des Energiespeichergehäuses.

Um ein Energiespeichergehäuse zu verschließen, wird üblicherweise ein Gehäusedeckel auf die Seitenwände aufgesetzt, der anschließend durch Verschraubungen, die durch den Deckel in die Träger verlaufen, befestigt wird. Oft ragen die im Energiespeichergehäuse angeordneten Energiespeichermodule deckelseitig über die Träger hinaus, wodurch ein Freiraum zwischen der Oberseite der Träger und dem Gehäusedeckel entsteht. An den Verschraubungsstellen werden in diesen Freiraum häufig Abstandshalter eingesetzt um die mechanische Kopplung des Trägers an den Gehäusedeckel zu optimieren. So wird eine Quetschung der Energiespeichermodule einerseits durch die Verschraubung, andererseits aber auch durch im Crashfall auftretende Druckkräfte, die durch die Abstandshalter übertragen werden, vermieden.

Der Erfindung liegt die Aufgabe zugrunde, eine Energiespeicheranordnung anzugeben, die im Vergleich zu aus dem Stand der Technik bekannten Systemen vorteilhaftere Eigenschaften, insbesondere bezüglich ihrer mechanischen Stabilität, aufweist.

Zur Lösung dieser Aufgabe ist erfindungsgemäß vorgesehen, dass das Energiespeichermodul wenigstens einen sich zwischen der deckelseitigen Seite des Trägers und dem Gehäusedeckel angeordneten Befestigungsabschnitt aufweist, wobei der Befestigungsabschnitt an dem Gehäusedeckel und dem Träger befestigt ist.

Durch die mechanische Kopplung des Energiespeichermoduls an den Träger sowie den Gehäusedeckel wird eine zusätzliche Erhöhung der Festigkeit erzielt. Dies ergibt sich einerseits aus dem bezüglich des Abstandshalter bereits erläuterten Effekt, dass Druckkräfte effektiv übertragen werden können. Andererseits wird durch die erfindungsgemäße Verwendung eines Verbindungsabschnitts nicht nur der Deckel mechanisch an den Träger gekoppelt, sondern die Verbindung schließt zusätzlich das Energiespeichermodul mit ein. Gleichzeitig wird die Energiespeicheranordnung dadurch vereinfacht, dass die sich sandwichartig zwischen Gehäusedeckel und Träger angeordneten Verbindungsabschnitte die Verbauung der zusätzlichen Abstandshalter überflüssig macht. Besonders vorteilhaft füllen die Verbindungsabschnitte den kompletten Freiraum zwischen Träger und Gehäusedeckel aus.

Erfindungsgemäß kann vorgesehen sein, dass der Gehäusedeckel, der Befestigungsabschnitt und der Träger über wenigstens ein diese Bauteile durchsetzendes Verbindungsmittel miteinander verbunden sind. Dadurch wird eine feste, lokale Verbindung der beteiligten Komponenten erreicht. Besonders vorteilhaft ist das gemeinsame Verbindungsmittel als eine Schraube oder Niete ausgebildet. Im Fall einer Schraube ist denkbar, dass eine Bohrung den Gehäusedeckel, den Befestigungsabschnitt und den Träger durchsetzt und die Bohrung im Träger ein Innengewinde aufweist. Ferner kann auch eine Schraubenmutter zur Fixierung der Schraube verwendet werden. Selbstverständlich besteht alternativ dazu die Möglichkeit, den Gehäusedeckel, den Befestigungsabschnitt und den Träger miteinander zu verschweißen oder zu verkleben, sofern ein Austausch dieser Teile im Rahmen von Wartungsarbeiten nicht vorgesehen ist.

In einer besonders vorteilhaften Ausführung ist der Befestigungsabschnitt als seitlich vorspringende Lasche ausgeführt. Diese Lasche ist zwischen der Oberseite des Trägers und dem Gehäusedeckel angeordnet und weist vorteilhafterweise die gleiche Höhe auf wie der dort verbleibende Freiraum, so dass dort kein zusätzliches Bauteil zur Kraftübertragung angebracht werden muss. Konkret kann die Lasche über die gesamte Länge oder zumindest einen Teilabschnitt der Länge einer Kante des Energiespeichermoduls verlaufen. So ist auch denkbar, dass ein Befestigungsabschnitt mehrere Befestigungsstellen aufweist. Beispielsweise sind mehrere Bohrungen in einer Lasche möglich, die sich längs des Energiespeichermoduls, gegebenenfalls über die gesamte Länge des Energiespeichermoduls erstreckt.

Ferner kann für eine erfindungsgemäßen Energiespeicheranordnung vorgesehen sein, dass zwei oder mehreren Energiespeichermodulen zugeordnete Befestigungsabschnitte an demselben Träger befestigt sind. Durch die zusätzliche Kopplung mehrerer Energiespeichermodule aneinander wird eine weitere Erhöhung der mechanischen Festigkeit der Energiespeicheranordnung erzielt. So können die unterschiedlichen Energiespeichermodulen zugeordneten Befestigungsabschnitte beidseitig an demselben Träger angeordnet sein, wobei deren Befestigungsabschnitte jeweils auf Lücke zueinander stehen. Diese Anordnung ermöglicht eine besonders effiziente Ausnutzung der an der Oberseite des Trägers zur Verfügung stehenden Fläche.

Weiterhin ist es möglich, dass erfindungsgemäße Befestigungsabschnitte an zwei oder mehreren Kanten des Energiespeichermoduls angeordnet sind. Dadurch wird ermöglicht, dass das Energiespeichermodul nicht nur an einem Träger befestigt werden kann, sondern insbesondere mit Längs- und zugleich Querträgern verbunden werden kann. Diese zusätzliche Verbindung mehrerer Träger untereinander über Energiespeichermodule hinweg bringt eine weitere Erhöhung der Festigkeit der Energiespeicheranordnung mit sich.

In einer weiteren erfindungsgemäßen Ausführung kann vorgesehen sein, dass das Energiespeichermodul ein Modulgehäuse umfasst, das einen oder mehrere Energiespeicher einfasst, wobei der Befestigungsabschnitt an dem Modulgehäuse angeordnet ist. Alternativ ist auch eine rahmenartige Einfassung der Energiespeichermodule denkbar, wobei der Befestigungsabschnitt an der Einfassung angeordnet ist. Dadurch, dass das Energiespeichermodul ein starres Modulgehäuse oder eine rahmenartige Einfassung mit gegebenenfalls das Energiespeichermodul zusätzlich stabilisierende Bänder, die die Energiespeicher umschließen, aufweist, wird eine weitere Erhöhung der mechanischen Stabilisierung des Energiespeichermoduls erreicht. Da das Energiespeichermodul durch die Befestigungsabschnitte an dem oder den Trägern fixiert ist, liefert die Festigkeit des Moduls auch einen Beitrag zur Gesamtfestigkeit des Energiespeichergehäuses. Vor diesem Hintergrund sollte das Modulgehäuse und/oder die Einfassung und/oder der Befestigungsabschnitt und/oder die Bänder aus einem eine im Vergleich zum Träger gleiche oder höhere Festigkeit aufweisenden Material, insbesondere Stahl oder Aluminium, bestehen. Schließlich sei erwähnt, dass die Energiespeicher durch wenigstens eine stoffschlüssige und/oder formschlüssige und/oder kraftschlüssige Verbindung an der Einfassung befestigt sein können. Beispielsweise können die Energiespeicher durch etwa Verklebungen oder Verschraubungen direkt an die Einfassung fixiert werden. Außerdem ist denkbar, dass mehrere Energiespeicher durch unter Spannung stehende Bänder aneinandergehalten werden, wobei die Energiespeicher und/oder die Bänder mit der rahmenartigen Einfassung und/oder dem Modulgehäuse durch eine der genannten Verbindungsarten gekoppelt sind.

Da die in Kraftfahrzeugen benutzten Energiespeicher im Belastungs- oder Ladezustand durch Erwärmung einer thermischen Belastung ausgesetzt sind, ist es nötig, die Energiespeicher zu kühlen. Vor diesem Hintergrund kann erfindungsgemäß vorgesehen sein, dass ein Teil der von der Einfassung unbedeckten Außenfläche des Energiespeichers mit einem Kühlelement in thermischem Kontakt steht, das als eine von einem Kühlfluid durchströmte Kühlplatte ausgebildet sein kann. Das bei dieser aktiven Kühlung verwendete Kühlfluid kann in einem Kühlkreislauf zirkulieren. Alternativ dazu ist die Kühlung durch einen durch das Energiespeichergehäuse geführten Luftstrom, der an der unbedeckten Außenfläche der Einfassung entlang geführt wird, denkbar. Der für diese passive Kühlung benötigte Luftstrom wird dabei entweder durch einen Ventilator oder durch den Fahrtwind erzeugt. Für den Fall, dass das Energiespeichermodul ein Modulgehäuse aufweist, ist es denkbar, dass das Modulgehäuse nicht durchgängig ausgeführt ist, sondern eine oder mehrere unbedeckte Außenflächen des Energiespeichers verbleiben, was ebenso die Möglichkeit eröffnet, die Energiespeicher wie erläutert zu kühlen.

Für ein erfindungsgemäßes Kraftfahrzeug ist vorgesehen, dass es eine erfindungsgemäße Energiespeicheranordnung umfasst. Die Energiespeicher der Energiespeicheranordnung dienen dabei beispielsweise der Speicherung der für den Antrieb des Fahrzeugs benötigten Energie. Bei den Energiespeichern kann es sich insbesondere um Batterien bzw. Akkumulatoren handeln.

Weitere Vorteile und Einzelheiten der Erfindung ergeben sich aus den im Folgenden beschriebenen Ausführungsbeispielen sowie anhand der Zeichnungen. Dabei zeigen:
- Fig. 1: eine Seitenansicht eines Kraftfahrzeugs, umfassend eine erfindungsgemäße Energiespeicheranordnung,
- Fig. 2: eine Aufsicht auf ein Energiespeichergehäuse mit Querstegen und Längsstegen,
- Fig. 3: eine Schnittansicht entlang der Linie III - III aus Fig. 2 durch die Energiespeicheranordnung,
- Fig. 4: ein Energiespeichermodul umfassend eine rahmenartige Einfassung, die erfindungsgemäße Befestigungsabschnitte aufweist,
- Fig. 5: eine Schnittansicht entlang der Linie V - V aus Fig. 4 durch ein erfindungsgemäßes Energiespeichermodul, und
- Fig. 6: eine Aufsicht auf ein erfindungsgemäßes Energiespeichermodul umfassend mehrere Energiespeicher sowie beidseitig an den Trägern auf Lücke zueinander angeordnete Befestigungsabschnitte.

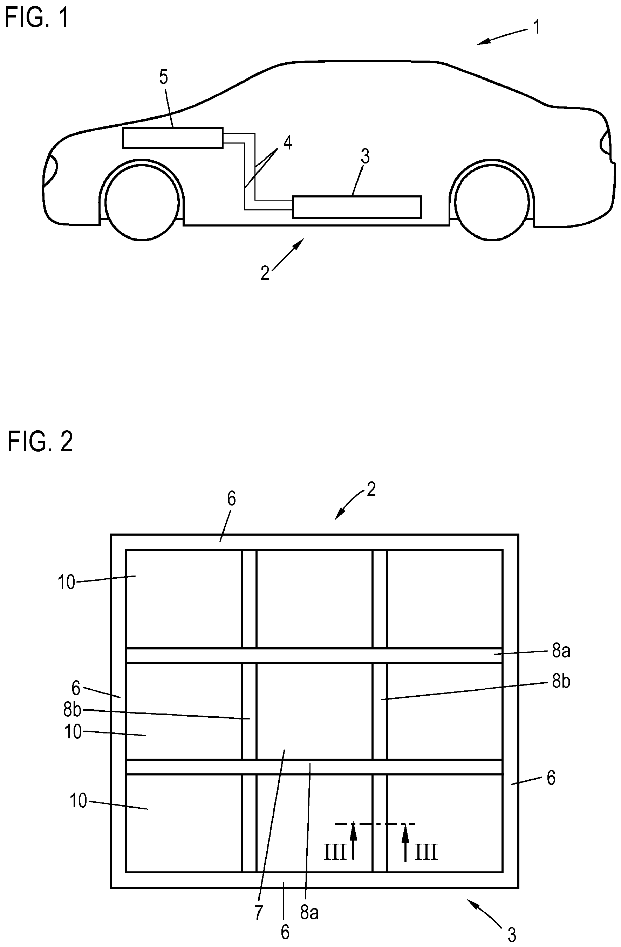

Das in Fig. 1 dargestellte Kraftfahrzeug 1 weist eine Energiespeicheranordnung 2, umfassend ein Energiespeichergehäuse 3 und wenigstens ein oder mehrere Energiespeicher (hier nicht dargestellt), auf. Die im Innern des Energiespeichergehäuses 3 angeordneten Energiespeicher sind über elektrische Verbindungsmittel 4 mit einem als Elektromotor ausgeführten Antriebsmotor 5 des Kraftfahrzeugs 1 verbunden.

In Fig. 2 ist eine Aufsicht auf das Energiespeichergehäuse 3 einer erfindungsgemäßen Energiespeicheranordnung 2 dargestellt. Das Energiespeichergehäuse 3 umfasst vier Seitenwände 6, einen Gehäuseboden 7, an dem die Seitenwände 6 senkrecht aus der Zeichenebene heraus anschließen sowie mehrere als Querträger ausgeführte Träger 8a und als Längsträger ausgeführte Träger 8b. Die Träger 8a, 8b verlaufen jeweils von einer Seitenwand 6 zur gegenüberliegenden Wand. Die senkrecht zueinander stehenden Träger 8a, 8b bilden insgesamt eine Fachstruktur mit neun Einzelfächern 10, in denen sich jeweils wenigstens ein Energiespeichermodul (hier nicht dargestellt) befindet. Der Vollständigkeit halber sei erwähnt, dass in diesem Ausführungsbeispiel die Träger 8a durchgehend von Wand zu Wand verlaufen, während die dazu senkrecht stehenden Träger 8b an den Kreuzungsstellen unterbrochen und demnach aus mehreren Einzelsegmenten zusammengesetzt sind. Der Gehäusedeckel, mit dem das Energiespeichergehäuse 3 durch Aufsetzen des Gehäusedeckels auf die Seitenwände 6 verschlossen wird, ist in dieser Abbildung nicht dargestellt.

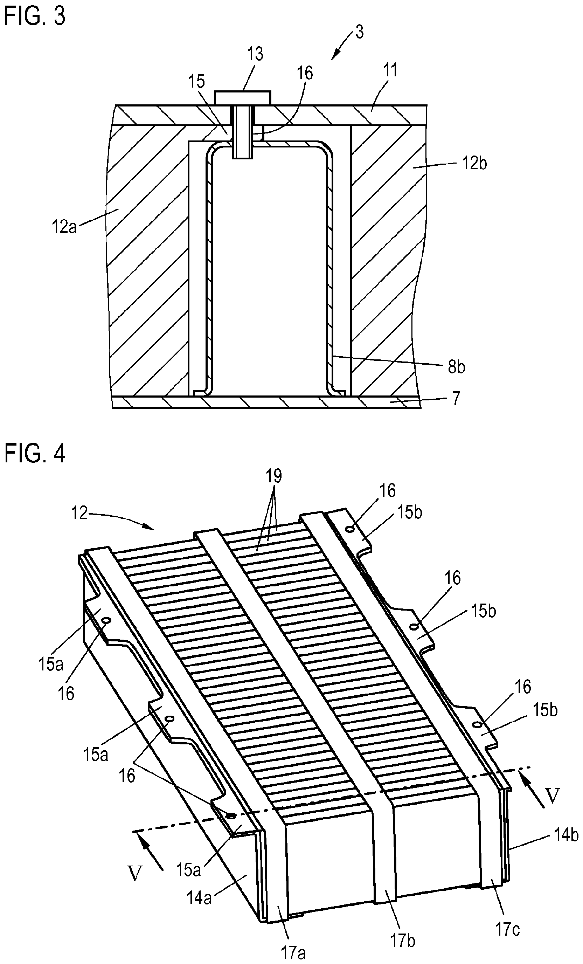

Fig. 3 zeigt die Abbildung des Schnitts III - III durch das Energiespeichergehäuse 3 aus Fig. 2, umfassend den Gehäuseboden 7, den Träger 8b, das einen erfindungsgemäßen Befestigungsabschnitt 15 aufweisende Energiespeichermodul 12a sowie ein weiteres Energiespeichermodul 12b, den Gehäusedeckel 11 und eine Schraube 13. Selbstverständlich kann die Schraube 13 durch eine Niete oder ein vergleichbares Verbindungsmittel ersetzt sein. Der Träger 8b der hier gezeigten Ausführung weist ein U- bzw. C-Profil auf, wobei die offene Seite am Gehäuseboden 7 an randseitigen Abkantungen montiert ist. In dem hier gezeigten Schnitt weist das Energiespeichermodul 12a einen Befestigungsabschnitt 15 auf, der als seitlich vorspringende Lasche ausgebildet ist. Diese Lasche ist sandwichartig im Freiraum zwischen der Oberseite des Trägers 8b und dem Gehäusedeckel 11 angeordnet, in dem ohne erfindungsgemäßen Befestigungsabschnitt 15 oft ein Abstandshalter verwendet werden müsste, um die Energiespeichermodule 12a, 12b im Falle einer Druckbelastung vor Beschädigungen zu schützen. Derartige Druckbelastungen können beispielsweise durch das Festziehen des den Gehäusedeckel schließenden Verbindungsmittels oder bei einem Unfall auftreten. Der Freiraum zwischen der Oberseite des Trägers 8b und dem Gehäusedeckel 11 wird im gezeigten Ausführungsbeispiel durch den erfindungsgemäßen Befestigungsabschnitt 15 gänzlich ausgefüllt. Die zusätzliche mechanische Kopplung des Energiespeichermoduls 12a an den Träger 8b sowie den Gehäusedeckel 11 zieht eine weitere Stabilisierung der Energiespeicheranordnung 2 nach sich.

An dem als Lasche ausgebildeten Befestigungsabschnitt 15 in Fig. 3 ist das Energiespeichermodul 12a durch die Schraube 13 fixiert. Das Verschließen des Energiespeichergehäuses 3 erfolgt durch Aufsetzen des Gehäusedeckels 11, der möglicherweise einrastet oder einschnappt und durch die Schraube 13 und weiterer Verschraubungen an dem Träger 8b sowie weiteren Trägern beziehungsweise Wänden des Energiespeichergehäuses 3 befestigt wird. Die Schraube 13 durchsetzt im gezeigten Ausführungsbeispiel den Gehäusedeckel 11, den Befestigungsabschnitt 15 und den Träger 8b, wobei die Bauteile 8b, 11, 15 dort eine Bohrung 16 aufweisen. Zum Fixieren der Schraube 13 kann die Bohrung 16 des Trägers 8b an der Befestigungsstelle ein Innengewinde aufweisen.

Der in Fig. 3 gezeigte Befestigungsabschnitt 15 reicht in etwa bis zur Mitte des Trägers 8b. Es sei darauf hingewiesen, dass der Befestigungsabschnitt 15 ebenso über die komplette Breite des Trägers 8b reichen könnte. Die Schraube 13 wäre in diesem Fall idealerweise zentral am Träger 8b angeordnet. In diesem Fall müssten die gegenüber an einem Träger angeordneten Befestigungsabschnitte auf Lücke zueinander stehen.

Das in Fig. 4 dargestellte Energiespeichermodul 12 umfasst mehrere Energiespeicher 19 sowie eine Einfassung, die drei die Energiespeicher 19 zusammenhaltende Bänder 17a, 17b, 17c sowie zwei Verbindungsprofile 14a, 14b umfasst. In diesem Ausführungsbeispiel werden die Verbindungsprofile 14a, 14b jeweils von den Bändern 17a, 17c an den Energiespeichern 19 fixiert, die wiederum durch das Band 17b und/oder ein Klebemittel befestigt sind. Die Verbindungsprofile 14a, 14b weisen jeweils drei Befestigungsabschnitte 15a, 15b auf, die als seitlich vorspringende Laschen ausgeführt sind. Jeder der Befestigungsabschnitte 15a, 15b weist zudem eine Bohrung 16 auf, durch die die der Verbindung von Gehäusedeckel 11, Lasche und Träger 8b dienenden Schraube 13 greift.

Ein in Zusammenhang mit den Energiespeichern 19 auftretendes Problem ist, dass sich die Energiespeicher 19 im Betrieb oder beim Aufladen stark erwärmen können, was sich negativ auf die Lebensdauer und/oder Leistungskapazität dieser Batterien auswirken kann. Mithin ist es erforderlich, die Energiespeicher 19 möglichst effizient zu kühlen. Durch die in Fig. 4 gezeigte Verwendung der Bänder 17a, 17b, 17c, die beispielsweise aus Metall oder Kunststoff bestehen können, ergeben sich von der Einfassung unbedeckte Außenflächen der Energiespeicher 19, was die Möglichkeit einer Kühlung bietet. Darüber hinaus sind Ausnehmungen in den Verbindungsprofilen 14a, 14b denkbar, die ebenfalls unbedeckte Außenflächen der Energiespeicher 19 zur Folge haben und somit eine weitere Möglichkeit zur Kühlung bieten. Die Details bezüglich der Kühlung werden nachfolgend näher erläutert.

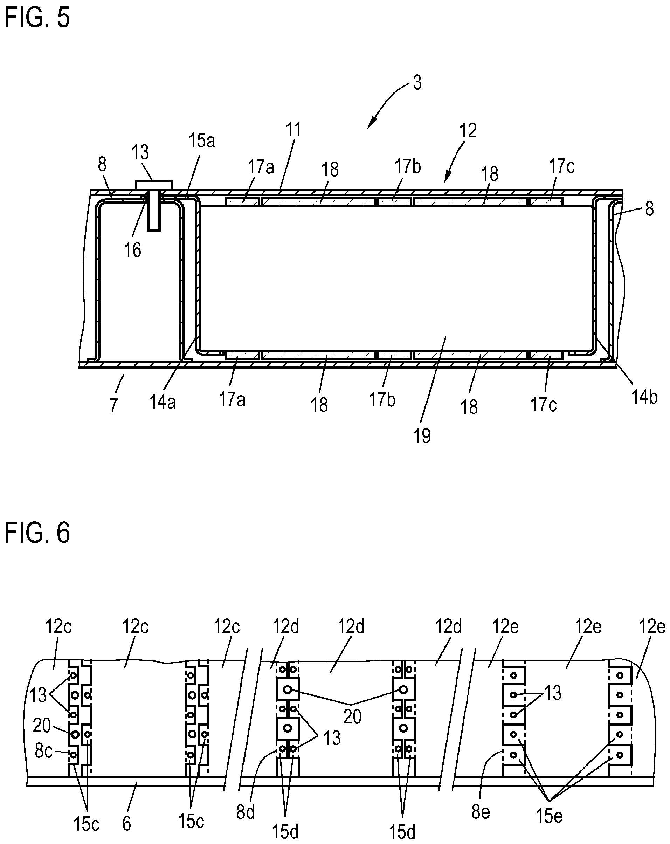

Fig. 5 zeigt den Schnitt V - V durch das erfindungsgemäße Energiespeichermodul 12 aus Fig. 4, das im Energiespeichergehäuse 3 verbaut ist. Die Schnittdarstellung zeigt den Energiespeicher 19, die Bänder 17a, 17b, 17c, die Verbindungsprofile 14a, 14b sowie den Befestigungsabschnitt 15a mit der Bohrung 16. Der hier dargestellte Schnitt verläuft bezüglich des Verbindungsprofils 14b nicht durch einen Befestigungsabschnitt 15b. Die Bohrung 16 stellt die Befestigungsstelle dar, an der der Träger 8 mit dem Befestigungsabschnitt 15a und dem Gehäusedeckel 11 mittels der Schraube 13 verbunden ist. In der gezeigten Ausführung liegen direkt an den Energiespeichern 19 die Kühlelemente 18 an. Dadurch, dass die Kühlelemente 18 in direktem thermischen Kontakt mit den Energiespeichern 19 stehen, wird eine möglichst effiziente, aktive Kühlung gewährleistet. Die Kühlelemente 18 können als Kühlplatten ausgebildet sein, die von einem in einem Kühlkreislauf zirkulierenden Kühlfluid durchströmt werden. Es sei darauf hingewiesen, dass ferner die passive Kühlung durch einen durch das Energiespeichergehäuse geführten Luftstrom ebenfalls denkbar ist. Dieser Luftstrom kann über einen Luftkanal (nicht dargestellt), der den Fahrtwind von außerhalb des Kraftfahrzeugs 1 durch das Energiespeichergehäuse 3 hindurch und wieder nach außen führt, geleitet werden. Alternativ kann ein Ventilator vorgesehen sein, der die zur aktiven Kühlung der Energiespeicher 19 verwendete Luft innerhalb eines Kreislaufes oder von außerhalb des Fahrzeuges fördert. In diesem Zusammenhang ist es ebenso denkbar, dass das erfindungsgemäße Verbindungsprofil derart ausgestaltet ist, dass zwischen dem Verbindungsprofil 14a, 14b und den Energiespeichern 19 ein Zwischenraum verbleibt, in dem ebenfalls ein Kühlelement angeordnet oder ein Luftstrom entlang geführt werden könnte.

Fig. 6 zeigt die Aufsicht auf den Ausschnitt einer erfindungsgemäßen Energiespeicheranordnung 2. Dargestellt sind neun Energiespeichermodule 12c, 12d, 12e, die Seitenwand 6 sowie die durch die gestrichelten Linien angedeuteten Träger 8c, 8d, 8e. Die Energiespeichermodule 12c, 12d, 12e weisen jeweils mehrere laschenartige Befestigungsabschnitte 15c, 15d, 15e auf, die jeweils an wenigstens einer Kante des zugehörigen Energiespeichermoduls 12c, 12d, 12e angeordnet sind. Die Befestigungsabschnitte 15c, 15d, 15e sind durch die Schrauben 13 an den Trägern 8c, 8d, 8e sowie am Deckel (nicht gezeigt) befestigt.

In Fig. 6 sind mehrere Möglichkeiten dargestellt, in welcher Weise die an demselben Träger angeordneten Befestigungsabschnitte jeweils zueinander angeordnet sein können. Der linksseitige Ausschnitt von Fig. 6 zeigt die Energiespeichermodule 12c umfassend als Laschen ausgebildete Befestigungsabschnitte 15c, die jeweils bis zur Mitte der Träger 8c reichen und auf Lücke zueinander angeordnet sind. Durch diese Ausführung ergibt sich die Möglichkeit, den Träger 8c von oben durch die Schrauben 20 oder ein vergleichbares Befestigungsmittel mit dem Gehäuseboden 7 (hier nicht dargestellt) zu verbinden.

Dadurch, dass die Befestigungsabschnitte 15d nur bis zur Mitte der Träger 8d reichen, ist es auch möglich, die Laschen jeweils direkt gegenüberliegend und nicht auf Lücke zueinander anzuordnen. Die Energiespeichermodule 12d in Fig. 6 zeigen dieses Ausführungsbeispiel.

Schließlich sind auf der rechten Seite von Fig. 6 die Energiespeichermodule 12e gezeigt, deren Befestigungsabschnitte 15e an den Trägern 8e jeweils gegenüberliegend auf Lücke zueinander angeordnet sind und über die komplette Breite der Träger 8e reichen, wodurch die Schrauben 13 zentral an den Trägern 8e angeordnet sind. Auch hier ist denkbar, dass die die Träger 8e am Gehäuseboden 7 befestigende Schrauben 20 unterhalb der Befestigungsabschnitte 15e angeordnet sind, die gegebenenfalls in die Träger 8e versenkt sind.

Alle in Fig. 6 gezeigten Ausführungsbeispiele sind auch auf die senkrecht zu den hier dargestellten Trägern 8c, 8d, 8e verlaufenden Träger analog anwendbar.

## Patentansprüche

1. Energiespeicheranordnung (2), umfassend wenigstens ein Energiespeichermodul (12) und ein Energiespeichergehäuse (3), wobei das Energiespeichermodul (12) wenigstens einen Energiespeicher (19) und das Energiespeichergehäuse (3) einen Gehäuseboden (7), mehrere randseitig an dem Gehäuseboden (7) anschließende Seitenwände (6) und einen Gehäusedeckel (11) sowie wenigstens einen zwischen zwei Seitenwänden (6) angeordneten Träger (8) aufweist,
**dadurch gekennzeichnet,**
**dass** das Energiespeichermodul (12) wenigstens einen sich zwischen der deckelseitigen Seite des Trägers (8) und dem Gehäusedeckel (11) angeordneten Befestigungsabschnitt (15) aufweist, wobei der Befestigungsabschnitt (15) an dem Gehäusedeckel (11) und dem Träger (8) befestigt ist.

2. Energiespeicheranordnung (2) nach Anspruch 1,
**dadurch gekennzeichnet,**
**dass** der Gehäusedeckel (11), der Befestigungsabschnitt (15) und der Träger (8) über wenigstens ein sie durchsetzendes Verbindungsmittel miteinander verbunden sind.

3. Energiespeicheranordnung (2) nach Anspruch 2,
**dadurch gekennzeichnet,**
**dass** das Verbindungsmittel eine Schraube (13) oder Niete ist.

4. Energiespeicheranordnung (2) nach Anspruch 1,
**dadurch gekennzeichnet,**
**dass** der Gehäusedeckel (11), der Befestigungsabschnitt (15) und der Träger (8) miteinander verschweißt oder verklebt sind.

5. Energiespeicheranordnung (2) nach einem der vorangehenden Ansprüche,
**dadurch gekennzeichnet,**
**dass** der Befestigungsabschnitt (15) als seitlich vorspringende Lasche ausgeführt ist.

6. Energiespeicheranordnung (2) nach einem der vorangehenden Ansprüche,
**dadurch gekennzeichnet,**
**dass** wenigstens zwei unterschiedlichen Energiespeichermodulen (12) zugeordnete Befestigungsabschnitte (15) an demselben Träger (8) befestigt sind.

7. Energiespeicheranordnung (2) nach Anspruch 6,
**dadurch gekennzeichnet,**
**dass** die wenigstens zwei unterschiedlichen Energiespeichermodule (12) beidseitig an dem Träger (8) und die zugehörigen Befestigungsabschnitte (15) auf Lücke zueinander angeordnet sind.

8. Energiespeicheranordnung (2) nach einem der vorangehenden Ansprüche,
**dadurch gekennzeichnet,**
**dass** das Energiespeichermodul (12) beidseitig Befestigungsabschnitte (15) aufweist.

9. Energiespeicheranordnung (2) nach einem der vorangehenden Ansprüche,
**dadurch gekennzeichnet,**
**dass** das Energiespeichermodul (12) ein Modulgehäuse oder wenigstens eine rahmenartige Einfassung umfasst, wobei das Modulgehäuse oder die Einfassung den Befestigungsabschnitt (15) aufweist.

10. Energiespeicheranordnung (2) nach Anspruch 9,
**dadurch gekennzeichnet,**
**dass** wenigstens ein Teil der von der Einfassung unbedeckten Außenfläche der Energiespeicher (19) mit einem Kühlelement (18) in thermischem Kontakt steht oder durch einen durch das Energiespeichergehäuse (3) geführten Luftstrom aktiv oder passiv kühlbar ist.

11. Energiespeicheranordnung (2) nach Anspruch 10,
**dadurch gekennzeichnet,**
**dass** das Kühlelement (18) als eine von einem Kühlfluid durchströmte Kühlplatte ausgebildet ist.

12. Kraftfahrzeug (1) umfassend wenigstens eine Energiespeicheranordnung nach einem der vorangehenden Ansprüche.
